# FASCICULE DE BREVET EUROPEEN

(11) **EP 3 517 441 B1**
(45) Date de publication et mention de la délivrance du brevet: **25.11.2020**
(21) Numéro de dépôt: 19152862.9
(22) Date de dépôt: 21.01.2019
(51) Int. Cl.: B64D 15/02

(54) **DISPOSITIF DE DEGIVRAGE D'UNE SURFACE CONFIGURE POUR NE PAS GENERER D'INTERFERENCE ELECTROMAGNETIQUE**
VORRICHTUNG ZUR ENTEISUNG EINER OBERFLÄCHE, DIE KONFIGURIERT IST, UM KEINE ELEKTROMAGNETISCHE INTERFERENZ ZU ERZEUGEN
DEVICE FOR DE-ICING A SURFACE CONFIGURED TO NOT GENERATE ELECTROMAGNETIC INTERFERENCE

(30) Priorité: 26.01.2018 FR 1850624
(43) Date de publication de la demande: 31.07.2019
(73) Titulaire: AIRBUS OPERATIONS (S.A.S.), 31060 Toulouse (FR)
(72) Inventeur: CARCONE, Jonathan, 31300 Toulouse (FR); ROUX, Pierre-Louis, 31200 Toulouse (FR)
(74) Mandataire: Gicquel, Olivier Yves Gérard

(56) Documents cités:
- JP-A- 2002 111 357
- US-A1- 2012 312 925
- US-B1- 7 882 888

## Description

La présente demande se rapporte à un dispositif de dégivrage d'une surface configuré pour ne pas générer d'interférence électromagnétique.

Certaines surfaces d'un aéronef doivent être dégivrées afin de limiter l'apparition et/ou l'accrétion de givre.

Selon un premier mode de réalisation, décrit dans le document FR2954280, et utilisé pour dégivrer les entrées d'air des nacelles d'un aéronef et sa voilure, un dispositif de dégivrage comprend au moins une source d'air chaud, au moins un système d'injection pour injecter l'air chaud, prélevé au niveau de la source à proximité de la surface à dégivrer, et au moins une canalisation pour acheminer l'air chaud depuis la source d'air chaud vers le système d'injection.

Selon ce premier mode de réalisation, l'air chaud est prélevé au niveau des étages de compression des moteurs qui assurent la fonction de sources d'air chaud. L'air chaud acheminé et injecté ayant une température supérieure à 250°C, chaque canalisation et chaque système d'injection du dispositif de dégivrage sont réalisés en un matériau métallique, résistant à des températures élevées.

Un dispositif de dégivrage selon le premier mode de réalisation ne peut pas être utilisé pour dégivrer une surface située à proximité d'un système sensible aux champs électromagnétiques tel qu'un radar, une sonde ou une antenne car les parties métalliques le constituant sont susceptibles de générer des interférences électromagnétiques.

Selon un deuxième mode de réalisation utilisé pour les pare-brises, les petites surfaces ou les surfaces éloignées des moteurs, un dispositif de dégivrage comprend au moins un réseau d'éléments conducteurs d'électricité, apposés contre l'une des faces de la surface à dégivrer, qui sont configurés pour dissiper de la chaleur par effet joule.

Un dispositif de dégivrage selon le deuxième mode de réalisation ne peut pas être utilisé pour dégivrer une surface située à proximité d'un système sensible aux champs électromagnétiques tel qu'un radar, une sonde ou une antenne car le réseau d'éléments conducteurs d'électricité génère des champs électromagnétiques susceptibles de perturber le bon fonctionnement du système sensible aux champs électromagnétiques.

Selon un troisième mode de réalisation décrit dans le document FR2922050 et utilisé pour dégivrer un radôme, un dispositif de dégivrage comprend un générateur d'air chaud, configuré pour réchauffer de l'air frais et le refouler à une température souhaitée, un jeu de canalisations d'alimentation d'air chaud, configuré pour acheminer l'air chauffé par le générateur d'air chaud vers la surface du radôme et le diffuser sous la forme d'un courant d'air laminaire et un jeu de canalisations de retour configuré pour récupérer l'air diffusé sur la surface du radôme et l'acheminer vers le générateur d'air chaud.

Ce troisième mode de réalisation est relativement complexe à mettre en œuvre car il est très difficile de diffuser l'air chaud sous la forme d'un courant d'air laminaire, notamment sur une surface courbe, et surtout de le récupérer pour le réchauffer.

Selon un quatrième mode de réalisation décrit dans le document FR2631745, un dispositif de dégivrage comprend un radôme présentant deux feuilles minces, en polycarbonate rigide, ainsi que des cloisons positionnées entre les feuilles minces pour créer une pluralité de canaux dans lesquels circule de l'air chaud. Ce radôme délimite une enceinte dans laquelle est positionnée une antenne. Le dispositif de dégivrage comprend également un système de chauffage et de circulation configuré pour chauffer l'air présent dans l'enceinte et l'injecter dans les canaux du radôme, l'air refroidi sortant des canaux du radôme étant refoulé dans l'enceinte.

Ce quatrième mode de réalisation peut ne pas être satisfaisant dans certaines conditions car l'air circulant dans le radôme doit avoir une température peu élevée, compatible avec le matériau du radôme. De plus, le rendement d'un tel dispositif de dégivrage n'est pas optimal. Le document JP 2002111357A divulgue une antenne protégée du givre et de la neige par une paroi creuse recouvrant l'antenne et dans laquelle circule un gaz chauffé. Le document US 7,882,888 divulgue un système de transfert de chaleur à deux phase utilisé pour refroidir des composants électroniques. Le document US 2012/0312925 divulgue un système de dégivrage de surfaces aérodynamiques d'un avion transportant de la chaleur d'actionneurs électromécaniques vers les surfaces aérodynamiques au moyen de caloducs. Ces inventions ne sont pas optimisées pour un dégivrage régulé de parois d'un aéronef.

La présente invention vise à remédier aux inconvénients de l'art antérieur.

A cet effet, l'invention a pour objet un dispositif de dégivrage d'une paroi d'un aéronef, comprenant une paroi, une source chaude sous la forme d'un système électrothermique, déportée par rapport à la paroi, et au moins un circuit fermé configuré pour acheminer un fluide caloporteur entre la source chaude et la paroi à dégivrer.

Selon l'invention, le circuit fermé comprend :
- Au moins une partie en vis-à-vis, en contact avec ou positionnée dans la paroi à dégivrer en un matériau transparent aux champs électromagnétiques,
- Au moins un condenseur en vis-à-vis de, en contact avec ou positionné dans la paroi à dégivrer, dans lequel le fluide caloporteur se condense en générant une énergie sous forme de chaleur latente transmise à la paroi à dégivrer, et
- Au moins un évaporateur en vis-à-vis de, en contact avec ou positionné dans la source chaude, dans lequel le fluide caloporteur s'évapore en absorbant une énergie sous forme de chaleur latente provenant de la source chaude.

Selon l'invention le dispositif de dégivrage comprend une boucle d'asservissement qui comporte un système de régulation pour réguler la température de la source chaude ainsi qu'un capteur de température configuré pour mesurer la température du système électrothermique et transmettre au moins une valeur de la température mesurée au système de régulation, le dispositif de dégivrage comprenant une alimentation électrique pilotée par le système de régulation et configurée pour alimenter le système électrothermique.

Le dispositif de dégivrage 18 selon l'invention permet d'obtenir un dégivrage efficace d'une paroi sans générer de courant électrique et sans utiliser d'éléments métalliques à proximité de la paroi. Lorsque la paroi de protection protège un instrument de mesure ou de communication, le dispositif de dégivrage contribue à améliorer sa précision et/ou son bon fonctionnement.

Selon un mode de réalisation, la partie du circuit fermé en vis-à-vis de, en contact avec ou positionné dans la paroi à dégivrer est en matériau composite.

Selon une autre caractéristique, le condenseur comprend au moins un tube qui s'étend entre une entrée et une sortie du condenseur en décrivant un serpentin de manière à couvrir au moins partiellement la paroi à dégivrer.

Selon un premier mode de réalisation, le condenseur se présente sous la forme d'une plaque, en un matériau ayant une conductivité thermique élevée, qui présente deux faces, parallèles entre elles, dont l'une est configurée pour être plaquée contre la paroi à dégivrer, le ou les tube(s) étant positionné(s) dans la plaque entre ses deux faces.

Selon un deuxième mode de réalisation, le condenseur est intégré dans la paroi à dégivrer, le ou les tube(s) étant positionné(s) entre les faces de la paroi à dégivrer.

Selon une première configuration, le circuit fermé est un caloduc capillaire utilisant le principe de capillarité pour assurer un retour du fluide caloporteur du condenseur vers l'évaporateur.

Selon une deuxième configuration, le circuit fermé est un caloduc gravitaire utilisant le principe de gravité pour assurer un retour du fluide caloporteur du condenseur vers l'évaporateur.

L'invention a également pour objet un aéronef comprenant au moins un instrument de mesure ou de communication protégé par une paroi de protection équipée d'un dispositif de dégivrage comme indiqué précédemment.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est un schéma d'un radôme équipé d'un dispositif de dégivrage qui illustre un mode de réalisation de l'invention,
- La figure 3 est un schéma d'un dispositif de dégivrage qui illustre un mode de réalisation de l'invention,
- La figure 4 est un schéma d'un condenseur d'un dispositif de dégivrage qui illustre un mode de réalisation de l'invention, et
- La figure 5 est un schéma d'un système de régulation d'un dispositif de dégivrage qui illustre un mode de réalisation de l'invention.

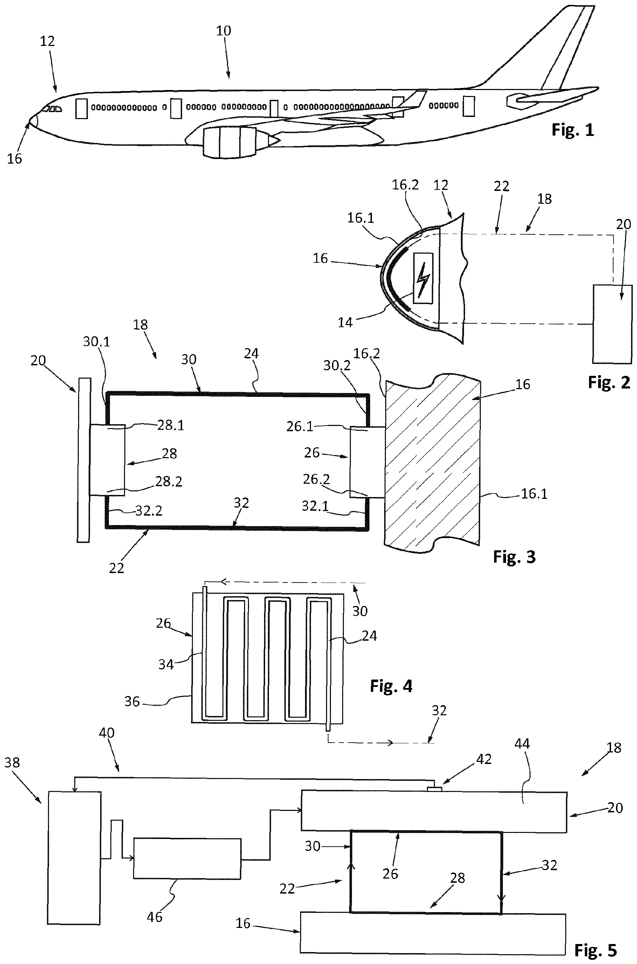

Comme illustré sur la figure 1, un aéronef 10 présente une pointe avant 12 dans laquelle est positionné un élément à protéger 14 (visible sur la figure 2), tel qu'un radar par exemple, protégé par une paroi de protection 16, appelée radôme, qui forme une partie du fuselage de l'aéronef 10.

Comme représenté sur la figure 2, la paroi de protection 16 présente une face extérieure 16.1, sur laquelle s'écoulent les flux d'air en vol et peut se former du givre, et une face intérieure 16.2 orientée vers l'élément à protéger 14.

L'aéronef 10 comprend au moins un dispositif de dégivrage 18 configuré pour limiter l'apparition et/ou l'accrétion de givre sur la paroi de protection 16.

Bien entendu, l'invention n'est pas limitée à cette application. Ainsi, le dispositif de dégivrage 18 peut être utilisé pour limiter l'apparition et/ou l'accrétion de givre sur toute paroi de protection recouvrant un radar, une sonde, une antenne ou tout autre élément de mesure ou de communication sensible aux champs électromagnétiques, et plus largement toute paroi d'un aéronef sur laquelle du givre peut se former.

Comme illustré sur les figures 2 et 3, le dispositif de dégivrage 18 comprend au moins une source chaude 20, déportée par rapport à la paroi de protection et/ou l'élément à protéger 14, et au moins un circuit fermé 22, en un matériau transparent aux champs électromagnétiques et ne générant donc pas d'interférence électromagnétique, dans lequel s'écoule un fluide caloporteur 24, ledit circuit fermé 22 étant configuré pour acheminer le fluide caloporteur 24 entre la source chaude 20 et la paroi de protection 16.

Par déportée, on entend que la source chaude 20 est suffisamment éloignée de l'élément à protéger 14 pour ne pas perturber son bon fonctionnement.

Selon une configuration, la source chaude 20 est un système électrothermique ou de l'air chaud, par exemple prélevé au niveau d'un moteur de l'aéronef 10 ou chauffé par un système électrothermique. Par un système électrothermique, on entend au moins un réseau d'éléments conducteurs d'électricité configurés pour dissiper de la chaleur par effet joule. Selon une caractéristique de l'invention, le circuit fermé 22 comprend au moins une partie, en vis-à-vis de, en contact avec ou positionnée dans la paroi de protection 16 et/ou de l'élément à protéger 14, réalisée en un matériau transparent aux champs électromagnétiques et ne générant pas de perturbations électromagnétiques.

Pour la présente demande, deux éléments sont disposés en vis-à-vis s'ils sont séparés d'une distance inférieure ou égale à 5 cm, cette distance n'altérant pas le transfert thermique entre les deux éléments.

Selon un mode de réalisation, au moins la partie du circuit fermé 22 en vis-à-vis de l'élément à protéger 14 est réalisée en matériau composite, tels qu'à titre d'exemples des fibres de verre ou des fibres de carbone noyées dans une matrice de résine thermoplastique ou thermodurcissable.

Selon un mode de réalisation visible sur la figure 3, le circuit fermé 22 comprend au moins un condenseur 26 en vis-à-vis de, en contact avec ou positionné dans la paroi de protection 16 à dégivrer, dans lequel, en fonctionnement, le fluide caloporteur 24 se condense en générant une énergie sous forme de chaleur latente transmise à la paroi de protection 16; au moins un évaporateur 28 en vis-à-vis de, en contact avec, ou positionné dans la source chaude 20, dans lequel, en fonctionnement, le fluide caloporteur 24 s'évapore en absorbant une énergie sous forme de chaleur latente provenant de la source chaude 20; au moins un premier conduit 30 configuré pour acheminer le fluide caloporteur 24 de l'évaporateur 28 vers le condenseur 26 et au moins un deuxième conduit 32 configuré pour acheminer le fluide caloporteur 24 du condenseur 26 vers l'évaporateur 28.

Le premier conduit 30 comprend une première extrémité 30.1, reliée à une sortie 28.1 de l'évaporateur 28, et une deuxième extrémité 30.2 reliée à une entrée 26.1 du condenseur 26. Le deuxième conduit 32 comprend une première extrémité 32.1 reliée à une sortie 26.2 du condenseur 26 et une deuxième extrémité 32.2 reliée à une entrée 28.2 de l'évaporateur 28. L'évaporateur 28 est dimensionné en fonction de la plage de température de la source chaude 20 et de la nature du fluide caloporteur 24 de manière à obtenir l'évaporation du fluide caloporteur 24 entre l'entrée 28.2 et la sortie 28.1 de l'évaporateur 28, le fluide caloporteur 24 étant à l'état liquide à l'entrée 28.2 de l'évaporateur 28 et à l'état gazeux à la sortie 28.1 de l'évaporateur 28.

Le condenseur 26 est dimensionné en fonction des besoins en dégivrage et de la nature du fluide caloporteur 24 de manière à obtenir la condensation du fluide caloporteur 24 entre l'entrée 26.1 et la sortie 26.2 du condenseur 26, le fluide caloporteur 24 étant à l'état gazeux à l'entrée 26.1 du condenseur 26 et à l'état liquide à la sortie 26.2 du condenseur 26. L'utilisation pour le dégivrage d'énergie sous forme de chaleur latente produite lors du changement de phase du fluide caloporteur 24 dans le condenseur 26 permet de pouvoir utiliser un fluide caloporteur 24 ayant une température réduite dans le circuit fermé 22 et d'optimiser le rendement du dispositif de dégivrage 18.

A titre indicatif, la température du fluide caloporteur 24 est inférieure ou égale à 12°C au niveau de la source.

Selon un mode de réalisation, le fluide caloporteur 24 est de l'air ou du méthanol.

Selon un mode de réalisation, le condenseur 26 comprend au moins un tube 34 qui s'étend entre l'entrée 26.1 et la sortie 26.2 du condenseur 26 en décrivant un serpentin de manière à couvrir au moins partiellement la paroi de protection 16 qui peut être plane ou courbe. Selon un mode de réalisation, le condenseur 26 se présente sous la forme d'une plaque souple 36, en un matériau ayant une conductivité thermique élevée, qui présente deux faces, parallèles entre elles, dont l'une est configurée pour être plaquée contre la paroi de protection 16, le ou les tube(s) 34 étant positionné(s) dans la plaque souple 36 entre ses deux faces.

Selon une configuration, le condenseur 26 est plaqué contre la face intérieure 16.2 de la paroi de protection 16 et maintenu plaqué contre la face intérieure 16.2 de la paroi de protection, comme par exemple par collage.

Selon un autre mode de réalisation, le condenseur 26 est intégré dans la paroi de protection 16, le tube 34 étant positionné entre les faces intérieure et extérieure 16.1, 16.2 de la paroi de protection 16.

L'évaporateur 28 peut se présenter sous la forme d'un échangeur thermique.

En fonctionnement, lorsque le fluide caloporteur 24 s'évapore dans l'évaporateur 26, cela induit une légère surpression qui provoque un écoulement naturel du fluide caloporteur 24 de l'évaporateur 28 vers le condenseur 26. Pour assurer le retour du fluide caloporteur 24 du condenseur 26 vers l'évaporateur 28, il est possible d'utiliser la gravité en positionnant le condenseur 26 en un point plus haut que l'évaporateur 28, la capillarité grâce à une structure interne adaptée du deuxième conduit 32 ou en positionnant une pompe ou un circulateur au niveau du deuxième conduit 32.

Selon un mode de réalisation, le circuit fermé 22 est un caloduc capillaire utilisant le principe de capillarité pour assurer le retour du fluide caloporteur 24 du condenseur 26 vers l'évaporateur 28, ou un caloduc gravitaire utilisant le principe de gravité pour assurer le retour du fluide caloporteur 24 du condenseur 26 vers l'évaporateur 28.

Le dispositif de dégivrage 18 comprend un système de régulation 38 configuré pour réguler la température de la source chaude 20 et in fine la capacité de dégivrage.

Selon une configuration, le dispositif de dégivrage 18 comprend une boucle d'asservissement 40 qui comporte, en plus du système de régulation 38, un capteur 42 configuré pour mesurer une caractéristique de la source chaude 20, plus particulièrement sa température, et transmettre au moins une valeur de cette caractéristique mesurée au système de régulation 38.

Selon un mode de réalisation, lorsque la source chaude 20 est un système électrothermique 44, le dispositif de dégivrage comprend une alimentation électrique 46 pilotée par le système de régulation 38 et configurée pour alimenter le système électrothermique 44 ainsi qu'un capteur de température 42 configuré pour mesurer la température du système électrothermique 44 et transmettre au moins une valeur de la température mesurée au système de régulation 38.

Le dispositif de dégivrage 18 selon l'invention permet d'obtenir un dégivrage efficace d'une paroi sans générer d'interférences électromagnétiques. Dans le cas d'une paroi de protection 16 d'un instrument de mesure ou de communication, le dispositif de dégivrage 18 permet d'améliorer sa précision et/ou son bon fonctionnement, par rapport aux problèmes de givre, qui pourraient être, en l'absence de dispositif de dégivrage conforme à l'invention, altérés en raison de l'accumulation de givre ou d'interférences électromagnétiques.

## Revendications

1. Dispositif de dégivrage d'une paroi d'un aéronef, comprenant une paroi (16), une source chaude (20) sous la forme d'un système électrothermique (44), déportée par rapport à la paroi (16), et au moins un circuit fermé (22) configuré pour acheminer un fluide caloporteur (24) entre la source chaude (20) et la paroi (16) à dégivrer, le circuit fermé (22) comprenant :
- au moins une partie en vis-à-vis de, en contact avec ou positionnée dans la paroi (16) à dégivrer en un matériau transparent aux champs électromagnétiques,
- au moins un condenseur (26) en vis-à-vis de, en contact avec ou positionné dans la paroi (16) à dégivrer, dans lequel le fluide caloporteur (24) se condense en générant une énergie sous forme de chaleur latente transmise à la paroi (16) à dégivrer, et
- au moins un évaporateur (28) en vis-à-vis de, en contact avec, ou positionné dans la source chaude (20), dans lequel le fluide caloporteur (24) s'évapore en absorbant une énergie sous forme de chaleur latente provenant de la source chaude (20),
le dispositif de dégivrage comprenant une boucle d'asservissement (40) qui comporte un système de régulation (38) pour réguler la température de la source chaude (20) **caractérisé en ce que** le dispositif de dégivrage comprend un capteur de température configuré pour mesurer la température du système électrothermique (44) et transmettre au moins une valeur de la température mesurée au système de régulation (38), le dispositif de dégivrage comprenant une alimentation électrique (46) pilotée par le système de régulation (38) et configurée pour alimenter le système électrothermique (44).

2. Dispositif de dégivrage selon la revendication 1, **caractérisé en ce que** la partie du circuit fermé (22) en vis-à-vis de, en contact avec ou positionnée dans la paroi (16) à dégivrer est en matériau composite.

3. Dispositif de dégivrage selon l'une des revendications précédentes, **caractérisé en ce que** le condenseur (26) comprend au moins un tube (34) qui s'étend entre une entrée (26.1) et une sortie (26.2) du condenseur (26) en décrivant un serpentin de manière à couvrir, au moins partiellement, la paroi (16) à dégivrer.

4. Dispositif de dégivrage selon la revendication précédente, **caractérisé en ce que** le condenseur (26) se présente sous la forme d'une plaque (36), en un matériau ayant une conductivité thermique élevée, qui présente deux faces, parallèles entre elles, dont l'une est configurée pour être plaquée contre la paroi (16) à dégivrer, le ou les tube(s) (34) étant positionné(s) dans la plaque (36) entre ses deux faces.

5. Dispositif de dégivrage selon la revendication 3, **caractérisé en ce que** le condenseur (26) est intégré dans la paroi (16) à dégivrer, le ou les tube(s) (34) étant positionné(s) entre les faces de la paroi (16) à dégivrer.

6. Dispositif de dégivrage selon l'une des revendications précédentes, **caractérisé en ce que** le circuit fermé (22) est un caloduc capillaire utilisant le principe de capillarité pour assurer un retour du fluide caloporteur (24) du condenseur (26) vers l'évaporateur (28).

7. Dispositif de dégivrage selon l'une des revendications 1 à 5, **caractérisé en ce que** le circuit fermé (22) est un caloduc gravitaire utilisant le principe de gravité pour assurer un retour du fluide caloporteur (24) du condenseur (26) vers l'évaporateur (28).

8. Aéronef comprenant une paroi de protection (16) et au moins un instrument de mesure ou de communication protégé par ladite paroi de protection (16), cette paroi de protection (16) étant équipée d'un dispositif de dégivrage selon l'une des revendications précédentes.

## Patentansprüche

1. Vorrichtung zur Enteisung einer Wand eines Luftfahrzeugs, umfassend eine Wand (16), eine Wärmequelle (20) in Form eines elektrothermischen Systems (44), die bezogen auf die Wand (16) versetzt ist, und mindestens einen geschlossenen Kreislauf (22), der dazu ausgebildet ist, ein Wärmeübertragungsfluid (24) zwischen der Wärmequelle (20) und der zu enteisenden Wand (16) zu transportieren, der geschlossene Kreislauf (22) umfassend:
- mindestens einen Abschnitt, der sich gegenüber der zu enteisenden Wand (16) befindet, damit in Kontakt steht oder darin positioniert ist, aus einem Material, das für elektromagnetische Felder durchlässig ist,
- mindestens einen Kondensator (26), der sich gegenüber der zu enteisenden Wand (16) befindet, damit in Kontakt steht oder darin positioniert ist, wobei das Wärmeübertragungsfluid (24) kondensiert, wobei eine Energie in Form von latenter Wärme erzeugt wird, die an die zu enteisende Wand (16) übertragen wird, und
- mindestens einen Verdampfer (28), der sich gegenüber der Wärmequelle (20) befindet, damit in Kontakt steht oder darin positioniert ist, wobei das Wärmeübertragungsfluid (24) verdampft, wobei es eine Energie in Form von latenter Wärme von der Wärmequelle (20) absorbiert,
die Enteisungsvorrichtung umfassend einen Regelkreis (40), der ein Regelungssystem (38) zur Regelung der Temperatur der Wärmequelle (20) aufweist, **dadurch gekennzeichnet, dass** die Enteisungsvorrichtung einen Temperatursensor umfasst, der dazu ausgebildet ist, die Temperatur des elektrothermischen Systems (44) zu messen und mindestens einen Wert der gemessenen Temperatur an das Regelungssystem (38) zu übertragen, die Enteisungsvorrichtung umfassend eine Stromversorgung (46), die vom Regelungssystem (38) gesteuert wird und dazu ausgebildet ist, das elektrothermische System (44) zu versorgen.

2. Enteisungsvorrichtung nach Anspruch 1, **dadurch gekennzeichnet, dass** der Abschnitt des geschlossenen Kreislaufs (22), der sich gegenüber der zu enteisenden Wand (16) befindet, damit in Kontakt steht oder darin positioniert ist, aus Verbundmaterial ist.

3. Enteisungsvorrichtung nach einem der vorhergehenden Ansprüche, **dadurch gekennzeichnet, dass** der Kondensator (26) mindestens ein Rohr (34) umfasst, das sich zwischen einem Eingang (26.1) und einem Ausgang (26.2) des Kondensators (26) erstreckt, indem es eine Schlangenlinie beschreibt, um die zu enteisende Wand (16) zumindest teilweise zu bedecken.

4. Enteisungsvorrichtung nach dem vorhergehenden Anspruch, **dadurch gekennzeichnet, dass** der Kondensator (26) in Form einer Platte (36) aus einem Material, das eine erhöhte Wärmeleitfähigkeit aufweist, vorliegt, die zwei Flächen aufweist, die parallel zueinander sind, wovon eine dazu ausgebildet ist, gegen die zu enteisende Wand (16) gedrückt zu werden, wobei das oder die Rohr(e) (34) in der Platte (36) zwischen deren zwei Flächen positioniert ist/sind.

5. Enteisungsvorrichtung nach Anspruch 3, **dadurch gekennzeichnet, dass** der Kondensator (26) in die zu enteisende Wand (16) integriert ist, wobei das oder die Rohr(e) (34) zwischen den Flächen der zu enteisenden Wand (16) positioniert ist/sind.

6. Enteisungsvorrichtung nach einem der vorhergehenden Ansprüche, **dadurch gekennzeichnet, dass** der geschlossene Kreislauf (22) ein Kapillar-Wärmeleitrohr ist, das das Kapillaritätsprinzip ausnutzt, um eine Rückführung des Wärmeübertragungsfluids (24) vom Kondensator (26) zum Verdampfer (28) sicherzustellen.

7. Enteisungsvorrichtung nach einem der Ansprüche 1 bis 5, **dadurch gekennzeichnet, dass** der geschlossene Kreislauf (22) ein Schwerkraft-Wärmeleitrohr ist, das das Schwerkraftsprinzip ausnutzt, um eine Rückführung des Wärmeübertragungsfluids (24) vom Kondensator (26) zum Verdampfer (28) sicherzustellen.

8. Luftfahrzeug umfassend: eine Schutzwand (16) und mindestens ein Mess- oder Kommunikationsmittel, das durch die Schutzwand (16) geschützt wird, wobei diese Schutzwand (16) mit einer Enteisungsvorrichtung nach einem der vorhergehenden Ansprüche ausgerüstet ist.

## Claims

1. Device for de-icing a wall of an aircraft, comprising a wall (16), a hot source (20) in the form of an electrothermal system (44), remote with respect to the wall (16), and at least one closed circuit (22) configured to route a heat-transfer fluid (24) between the hot source (20) and the wall (16) to be de-iced, the closed circuit (22) comprising:
- at least one part facing, in contact with or positioned in the wall (16) to be de-iced made of a material that is transparent to electromagnetic fields,
- at least one condenser (26) facing, in contact with or positioned in the wall (16) to be de-iced, in which the heat-transfer fluid (24) is condensed, generating an energy in the form of latent heat transmitted to the wall (16) to be de-iced, and
- at least one evaporator (28) facing, in contact with or positioned in the hot source (20), in which the heat-transfer fluid (24) evaporates by absorbing an energy in the form of latent heat originating from the hot source (20),
the de-icing device comprising a servocontrol loop (40) which comprises a regulation system (38) for regulating the temperature of the hot source (20), **characterized in that** the de-icing device comprises a temperature sensor configured to measure the temperature of the electrothermal system (44) and transmit at least one measured temperature value to the regulation system (38), the de-icing device comprising an electrical power supply (46) driven by the regulation system (38) and configured to power the electrothermal system (44).

2. De-icing device according to Claim 1, **characterized in that** the part of the closed circuit (22) facing, in contact with or positioned in the wall (16) to be de-iced is made of a composite material.

3. De-icing device according to one of the preceding claims, **characterized in that** the condenser (26) comprises at least one pipe (34) which extends between an inlet (26.1) and an outlet (26.2) of the condenser (26) by describing a coil so as to cover, at least partially, the wall (16) to be de-iced.

4. De-icing device according to the preceding claim, **characterized in that** the condenser (26) takes the form of a plate (36), made of a material having a high thermal conductivity, which has two faces, parallel to one another, one of which is configured to be pressed against the wall (16) to be de-iced, the pipe or pipes (34) being positioned in the plate (36) between its two faces.

5. De-icing device according to Claim 3, **characterized in that** the condenser (26) is incorporated in the wall (16) to be de-iced, the pipe or pipes (34) being positioned between the faces of the wall (16) to be de-iced.

6. De-icing device according to one of the preceding claims, **characterized in that** the closed circuit (22) is a capillary heat pipe using the principle of capillarity to ensure a return of the heat-transfer fluid (24) from the condenser (26) to the evaporator (28).

7. De-icing device according to one of Claims 1 to 5, **characterized in that** the closed circuit (22) is a gravity heat pipe using the principle of gravity to ensure a return of the heat-transfer fluid (24) from the condenser (26) to the evaporator (28).

8. Aircraft comprising a protection wall (16) and at least one measurement or communication instrument protected by said protection wall (16), this protection wall (16) being equipped with a de-icing device according to one of the preceding claims.
